# EUROPEAN PATENT APPLICATION

(11) **EP 2 295 371 A1**
(43) Date of publication of application: **16.03.2011**
(21) Application number: 10176075.9
(22) Date of filing: 09.09.2010
(51) Int. Cl.: B67D 1/04

(54) **Foodstuff dispenser**

(30) Priority: 10.09.2009 GB 0915826
(71) Applicant: IMI Cornelius (UK) Limited, Brighouse, West Yorkshire HO6 4LX (GB)
(72) Inventor: Wiemer, Klaus, 45478 Muelheim (DE); Altenbach, Heinz, 51379 Leverkusen (DE); Schweda, Andre, 45468 Mülheim an Der Ruhr (DE)
(74) Representative: Wightman, David Alexander

(57) **Abstract**

A dispenser 2 for flowable foodstuffs comprises a rigid shell 6 in which a flexible container 4 for the foodstuff and an inflatable reservoir 12 are received. The container 4 has a connector 16 for attaching a nozzle 20 through which foodstuff is dispensed by inflating the reservoir 12 to apply pressure to displace foodstuff from the container 4. The nozzle 20 is provided with a valve 26 that is operable to open and close the nozzle 20 and is linked to an air compressor for inflating the reservoir 12. Inflation pressure is increased as the foodstuff is dispensed up to a maximum pressure less than the burst strength of the container 4.

## Description

This invention relates to a foodstuff dispenser and has particular, but not exclusive application to a dispenser for a flowable foodstuff such as yoghurt, soft ice cream and similar products. The dispenser may be suitable for dispensing individual portions, possibly in metered amounts, on demand, for example by a user via a suitable interface.

It is a preferred object of the present invention to provide apparatus that is capable of conditioning the foodstuff so that it is ready to dispense when required, while preferably maintaining quality and storage life of the foodstuff.

It is another preferred object of the present invention to provide apparatus that is capable of replenishing the foodstuff in a simple manner, while preferably minimising cleaning and sanitisation without compromising hygiene.

It is yet another preferred object of the present invention to provide apparatus that is capable of dispensing the foodstuff from a pre-packed container, while preferably minimising yield loss.

These and other preferred objects, benefits and advantages of the present invention will be apparent to those skilled in the art from a consideration of the following description and, where necessary, with reference to the drawings.

According to one aspect of the present invention, there is provided apparatus for dispensing a flowable foodstuff comprising means for receiving packaging containing the foodstuff, means for cooling the foodstuff, means for displacing the foodstuff from the packaging, an outlet nozzle for dispensing foodstuff displaced from the packaging, and a valve for controlling flow of foodstuff through the outlet nozzle.

The packaging may be reduced in size in response to displacement of the foodstuff. For example, the packaging may comprise a flexible container such as a pouch made, for example, of polymeric material, preferably a food grade polymer compatible with the foodstuff. The packaging container is preferably collapsible or at least partially collapsible under an externally applied pressure to force the foodstuff from the packaging.

The displacing means may increase in size to displace foodstuff from the packaging. For example, the displacing means may comprise a flexible reservoir such as a bag or bladder made, for example, of fluid impermeable material, preferably a gas impermeable polymeric material. The displacing reservoir is preferably connectable to a fluid supply, preferably a gas supply such as an air compressor to inflate the displacing reservoir and thereby apply pressure to collapse the packaging container and force foodstuff from the container.

The displacing means may be controlled to dispense a metered or measured volume of foodstuff. For example, the increase in volume of the displacing reservoir preferably matches the reduction in volume of the packaging container and the change in volume of the displacing reservoir may be used to control the volume of foodstuff that is displaced from the packaging container. The change in volume of the displacing reservoir may be controlled to provide a uniform rate of change per unit time so that, for a given dispense time, the overall change in volume and thus the volume of foodstuff dispensed can be determined with reasonable accuracy.

The receiving means may receive both the packaging container and the displacing reservoir and may be substantially rigid so that change in volume of the displacing reservoir causes a similar change in volume of the packaging container. For example, the receiving means may comprise a shell that substantially surrounds the packaging container and the displacing reservoir.

The shell preferably includes a part that is movable to open the shell to allow the packaging container to be inserted and, when empty, removed and replaced. The shell may comprise a base part and a lid or cover connected to the base part by a hinge that allows the shell to be opened and closed.

The lid or cover may be secured in the closed position to prevent the shell opening accidentally or inadvertently during dispense and may additionally be locked to prevent unauthorised release of the lid or cover to open the shell. Any suitable means may be employed to secure and, optionally, lock the lid or cover in the closed position.

The displacing reservoir may be placed against and directly contact the packaging container within the shell. Alternatively, the displacing reservoir and packaging container may be separated by a force transmitting member that applies the force generated by increase in volume of the displacing reservoir to the packaging container. The force transmitting member may spread the force so that it is distributed over a wider area of the packaging container. Spreading the force may result in the packaging container collapsing in a more controlled manner that may assist dispense and may reduce yield loss if the packaging container can be made to collapse without forming pockets or areas in which foodstuff is trapped so that it cannot be dispensed.

The cooling means may cool the packaging container and thus the foodstuff within the packaging container directly. Alternatively, the cooling means may cool the shell and thus cool the packaging container within the shell and foodstuff within the packaging container. For example, the shell or at least that part of the shell in contact with the packaging container may be made of a material having a high thermal conductivity such as metal or alloy although other thermally conducting materials including some plastics may be employed. The cooling means may also cool the outlet nozzle directly or through the shell.

The cooling means may comprise a coolant circuit for circulating a fluid medium such as a refrigerant for cooling the packaging container directly or indirectly via the shell. Alternatively, the cooling means may comprise a thermoelectric circuit for electrically cooling the packaging container directly or indirectly via the shell.

Preferably, the cooling means is controlled to maintain the foodstuff at a desired temperature or within a desired temperature range. For example, the cooling means may be responsive to one or more temperature sensors for controlling operation of the cooling means to maintain the desired temperature or temperature range. At least one temperature sensor may be arranged to monitor the temperature of the foodstuff within the packaging container, for example, by contact with the packaging container. Alternatively, or additionally at least one temperature sensor may be arranged to monitor the temperature of the shell, for example by contact with the shell. The or each temperature sensor may provide a signal to a controller operable to prevent dispense if the temperature varies from the desired temperature or temperature range by more than a pre-determined value.

The cooling means may be adjustable to set the desired temperature or temperature range whereby the setting can be varied according to the contents of the packaging container. The apparatus may be operable to prevent dispense or provide a warning or both prevent dispense and provide a warning if the temperature varies from the desired temperature or the desired temperature range such that the quality and/or condition of the foodstuff may have been affected. Where provided, the warning may be visual or audible or both visual and audible.

The outlet nozzle may be configured to dispense foodstuff displaced from the packaging container into a vessel so that the foodstuff does not contact other parts of the apparatus. The outlet nozzle may be disposable so that it can be removed and replaced when replacing the packaging container. In this way, cleaning may be avoided or reduced when replacing a used packaging container with a new packaging container.

The packaging container may be sealed during manufacture to preserve the foodstuff and may be provided with a connector for attaching the outlet nozzle. The outlet nozzle may include a device such as a cutter to pierce the packaging container so that the foodstuff can be dispensed through the outlet nozzle. The packaging container may be pierced when the outlet nozzle is attached to the connector on the packaging container. A screw thread or bayonet coupling may be provided to attach the outlet nozzle to the connector.

The valve may be opened and closed manually to control dispense of the foodstuff. In this way, portion size (volume of foodstuff dispensed) may be controlled manually by the period of time the valve is open. Alternatively, the dispense valve may be opened and closed automatically to control dispense of the foodstuff. In this way, portion size may be controlled by the period of time the valve is open and/or by the rate of inflation of the displacing reservoir.

Opening and closing the valve may be linked to the fluid supply for inflating the displacing reservoir to control dispense of the foodstuff. In one arrangement, the valve may be opened automatically in response to the pressure of the foodstuff in the packaging container. In another arrangement, the valve may be opened and closed by any suitable means such as a solenoid in response to the supply of fluid to the displacing reservoir. In yet another arrangement, the supply of fluid to the displacing reservoir may be provided in response to opening and closing the valve.

The outlet nozzle may comprise a flexible tube and the valve may be operable to flatten or pinch the tube closed to prevent dispense of the foodstuff. In one arrangement, a valve member is operable to pinch the tube at upper and lower positions during a first stage of closing and to release the tube at the lower position during a second stage of closing to draw air into the tube and suck foodstuff back into the tube. The valve may be operated by a solenoid so as to be open when the solenoid is energised and closed when the solenoid is de-energised or vice versa.

The valve may be responsive to pressure applied to the foodstuff in the packaging container by the displacing reservoir. For example, a valve member may be biased to flatten or pinch the tube closed until the pressure applied to the foodstuff overcomes the biasing to open the outlet nozzle. In this way, the application and removal of pressure applied to the foodstuff may be used so that the valve opens automatically during dispense and closes and remains closed between dispenses.

Alternatively or additionally, the valve may be linked to the supply of fluid to the displacing reservoir. For example, the supply of fluid to the displacing reservoir may be responsive to operation of the valve or operation of the valve may be responsive to the supply of fluid to the displacing reservoir.

The outlet nozzle may be provided with a self-closing aperture such as one or more slits at the outlet end that open and close automatically in response to dispense of foodstuff and, when closed, prevent foodstuff dripping from the outlet nozzle.

The apparatus may include a user interface for activating dispense of foodstuff. The user interface may comprise any suitable user operable control such as a push button, lever or touch pad to start a dispense and control means responsive to the user operable control for controlling the displacing means to displace foodstuff from the packaging container. The apparatus may be configured to monitor dispense and provide a visual or audible or both visual and audible warning when the packaging container is empty or contains insufficient foodstuff to dispense a pre-determined minimum volume of foodstuff.

The control means may be operable to control the supply of fluid to inflate the displacing reservoir to force foodstuff from the packaging container. For example, the control means may start and stop an air compressor supplying compressed air to the displacing reservoir. Alternatively, the control means may open and close a valve in a line supplying compressed air to the displacing reservoir. The apparatus may be configured so that activation via the user operable control dispenses a single portion of known volume, for example by opening the valve for a pre-determined period of time. The apparatus may be configured so that the user can select the volume to be dispensed from a plurality of portions having pre-set volumes or even to allow free dispense of a portion having a volume set by the user, for example by continuous activation of the user operable control.

The control means may be operable to monitor the open shelf-life of the packaging container and to prevent dispense of food on expiry of the shelf-life. For example, the control means may detect insertion of a new packaging container and count down the time until expiry of the openshelf life.

The control means may be operable to determine the remaining product life when a new packaging container is inserted and to prevent dispense on expiry of the product life. For example, the packaging container may be provided with best before and end dates in a machine readable form such as a barcode and the control means may read the information when a new packaging container is inserted.

The apparatus may include a sensor to detect the presence of a vessel below the outlet nozzle to prevent dispense of foodstuff if a vessel is not present. The apparatus may store and deliver a vessel to a position below the outlet nozzle when the user activates dispense of foodstuff. The apparatus may select and deliver a size of vessel appropriate to the volume of the portion selected by the user. Alternatively, the user may place a vessel below the outlet nozzle. The apparatus may control the volume of foodstuff dispensed by means of the gas supply to the displacing reservoir as described previously. Alternatively, the apparatus may control the volume of foodstuff dispensed by weight. For example, in one arrangement the apparatus may know or detect the weight of the vessel placed below the outlet nozzle prior to dispense and monitor the increase in weight as foodstuff is dispensed and control dispense according to the weight of foodstuff in the vessel. In another arrangement, the apparatus may know or detect the weight of a packaging container when it is installed in the apparatus and monitor the reduction in weight as foodstuff is dispensed and control dispense according to the weight of the foodstuff remaining in the packaging container.

The apparatus may include means for adding one or more edible components to the foodstuff. Such edible components may include flavourings such as flavoured syrups or toppings such as nuts. These components may be added separately and the user operable control may include means for selection of any edible components to be added. The edible component(s) may be dispensed at any point in the dispense cycle, including but not limited to before, during, or after the foodstuff. The addition of such edible components may allow the user to customise a base foodstuff such as plain yogurt or ice cream to modify the appearance and/or taste according to user preference.

According to another aspect of the present invention, there is provided a method of dispensing a flowable foodstuff from a packaging container, the method comprising the steps of providing a packaging container containing a flowable foodstuff with an outlet nozzle controlled by a valve, controlling the temperature of the foodstuff in the packaging container, and applying pressure to the packaging container to force foodstuff from the packaging container through the outlet nozzle for dispense of the foodstuff.

The flowable foodstuff may be viscous, for example a yoghurt or soft ice cream that is preferably stored and dispensed at a low temperature to maintain the condition and consistency of the foodstuff.

The valve may be pressure responsive to open and close automatically in response to dispense of the foodstuff. For example, the outlet nozzle may comprise a flexible tube and the valve may comprise a pinch valve that is biased to flatten the tube wall to prevent flow of foodstuff when closed and is opened to allow flow of foodstuff when the pressure of the foodstuff overcomes the biasing.

Alternatively, the valve may be operable manually or automatically, for example the valve may be opened and closed by a solenoid or other suitable means.

The valve may be linked to means for applying pressure to the packaging container. For example, pressure may be applied to the packaging container by confining the packaging container and a fluid reservoir in a shell and supplying fluid to inflate the reservoir and thereby compress the packaging container. Operation of the valve may control the supply of fluid to the reservoir. Alternatively, the supply of fluid to the reservoir may control operation of the valve.

The temperature of the foodstuff may be controlled by a fluid cooling circuit such as a refrigeration circuit. Alternatively, the temperature of the foodstuff may be controlled by a thermoelectric device.

The volume of foodstuff dispensed may be controlled to dispense individual portions of known volume. This may involve monitoring the rate and duration of dispense or by monitoring the weight of foodstuff dispensed from or remaining in the packaging container.

The pressure applied to the packaging container may be controlled to provide a substantially constant flow rate of dispensed foodstuff. The pressure applied to the packaging container may be increased as foodstuff is dispensed.

These and other features of the invention are described hereinafter in more detail by way of example only with reference to the accompanying drawings in which like reference numerals are used to indicate corresponding parts and wherein:
**Figure 1** is a schematic view of apparatus embodying the invention, the apparatus being shown in an open position for loading a foodstuff pouch;
**Figure 2** is a schematic view similar to Figure 1, the apparatus being shown in a closed position prior to dispense;
**Figures 3****,** **4** **and** **5** are schematic views similar to Figure 2, the apparatus being shown in various stages of dispense;
**Figure 6** is a schematic view of the outlet nozzle for dispensing the foodstuff;
**Figure 7** is a front view of apparatus according to a practical embodiment of the invention;
**Figure 8** is a rear view of the apparatus shown in Figure 7;
**Figure 9** is a side view of the apparatus shown in Figures 7 and 8;
**Figure 10** is a longitudinal sectional view of the apparatus shown in Figures 7 to 9;
**Figure 11** is a sectional view, to an enlarged scale, showing the pouch connector and outlet nozzle of the apparatus shown in Figures 7 to 10 connected to the pouch;
**Figure 12** is an isometric view of the pouch connector and outlet nozzle shown in Figure 11;
**Figure 13** is a sectional view, to an enlarged scale, showing an alternative pouch connector and outlet nozzle connected to the pouch;
**Figure 14** is diagrammatic view of the outlet nozzle in a closed condition; and
**Figure 15** is a diagrammatic view of the outlet nozzle in an open condition.

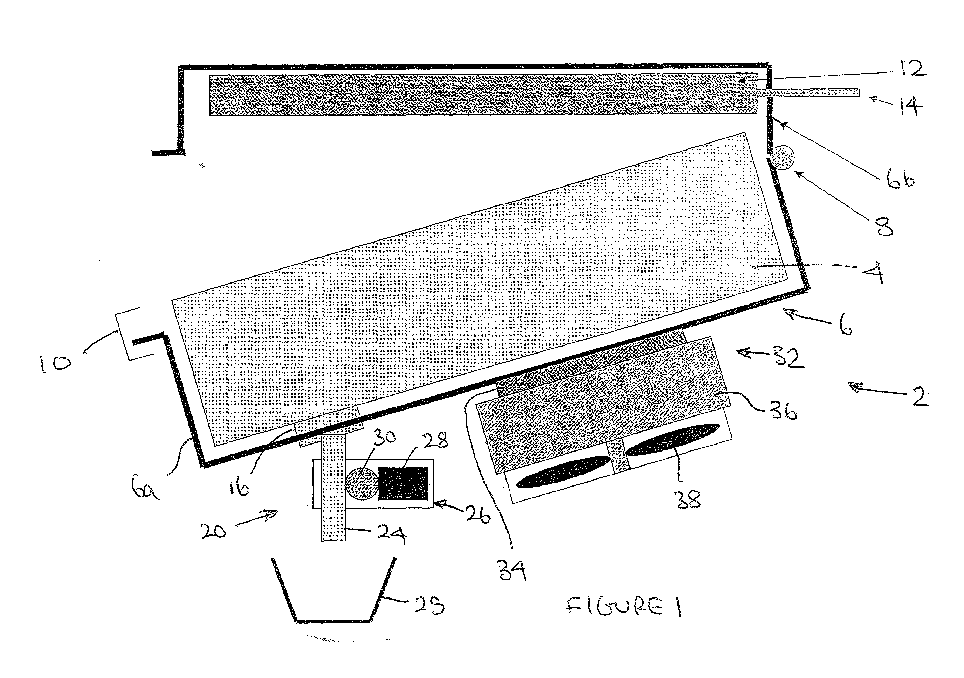

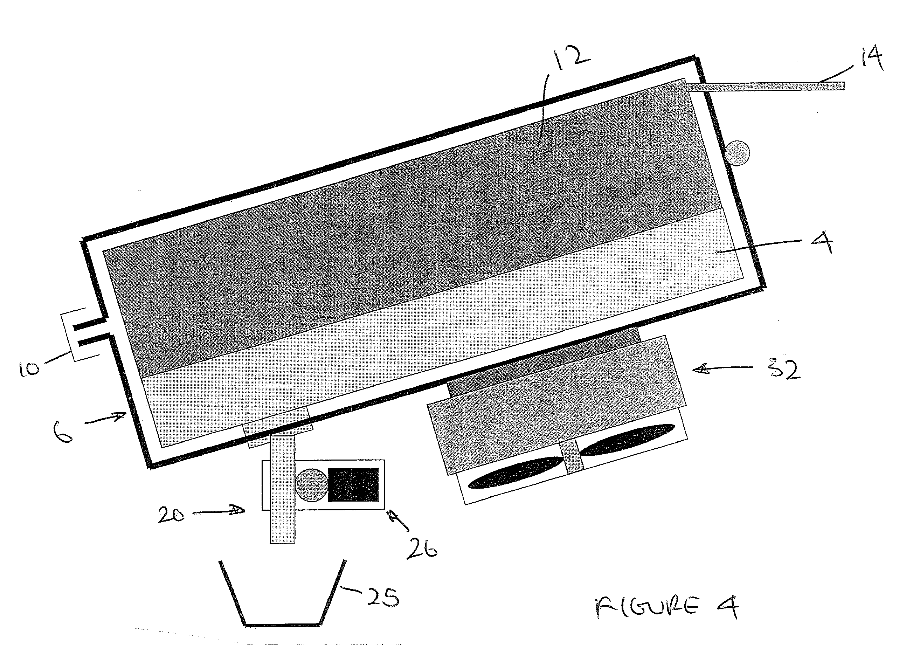

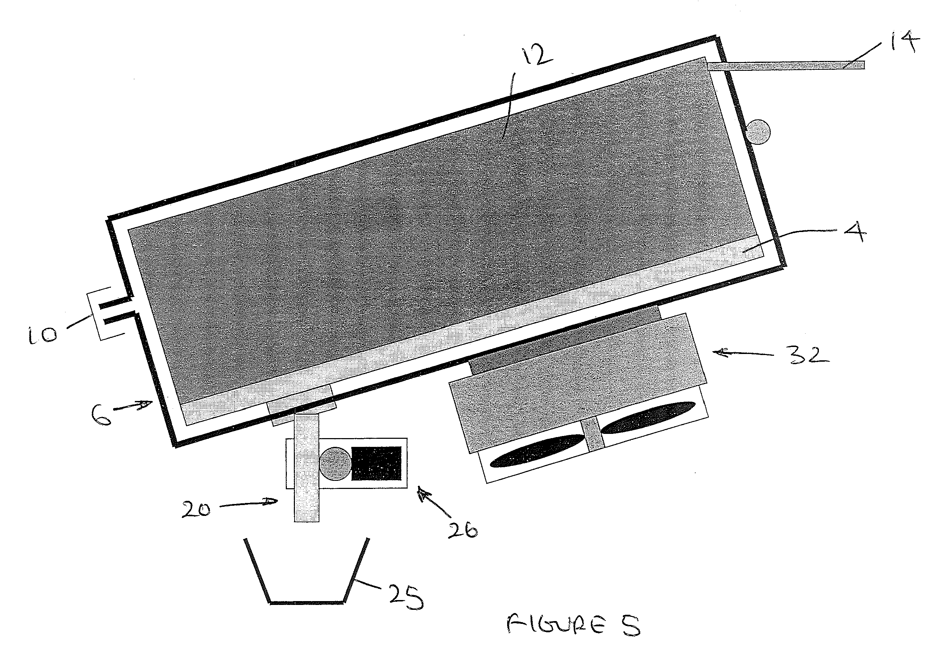

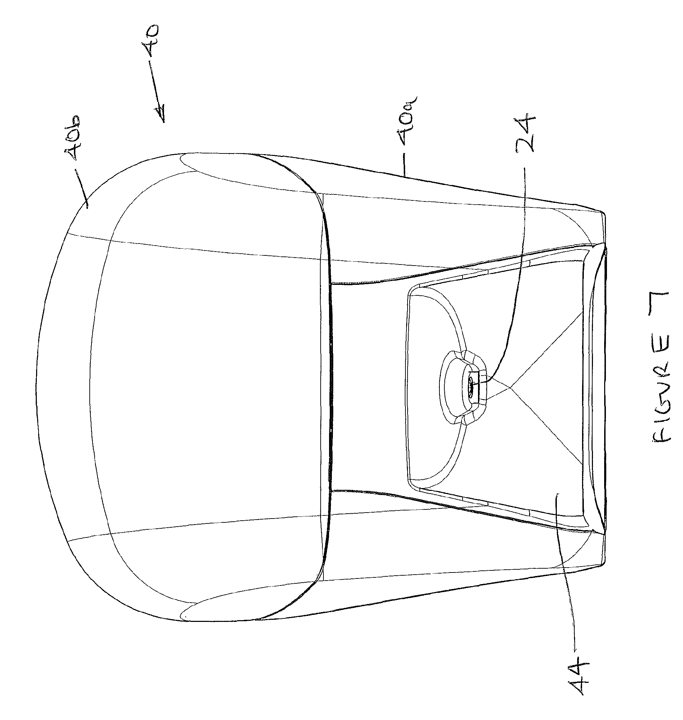

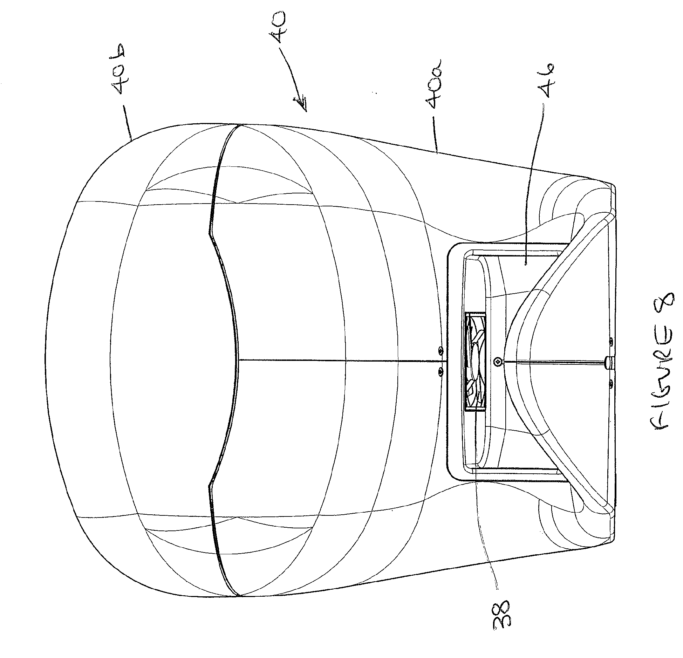

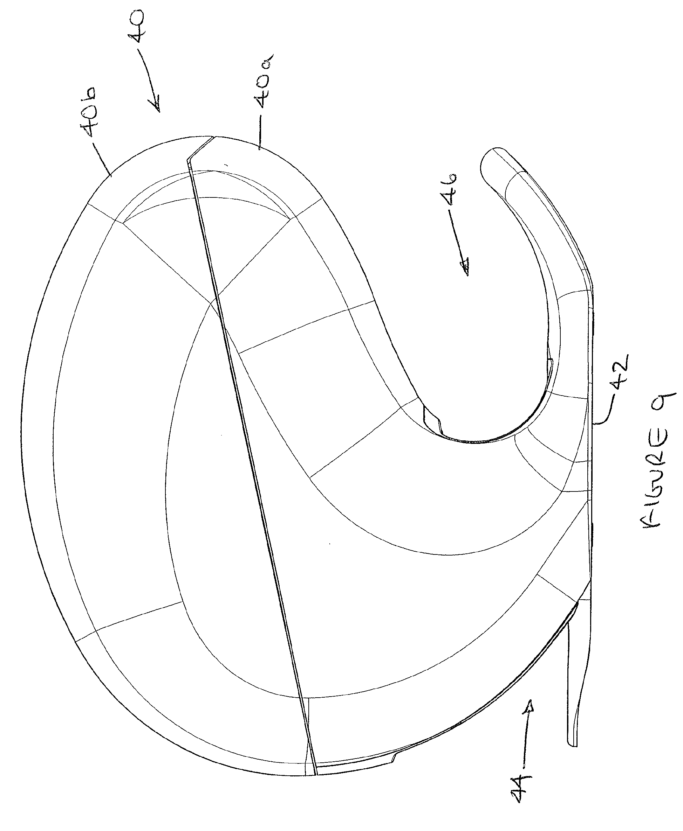

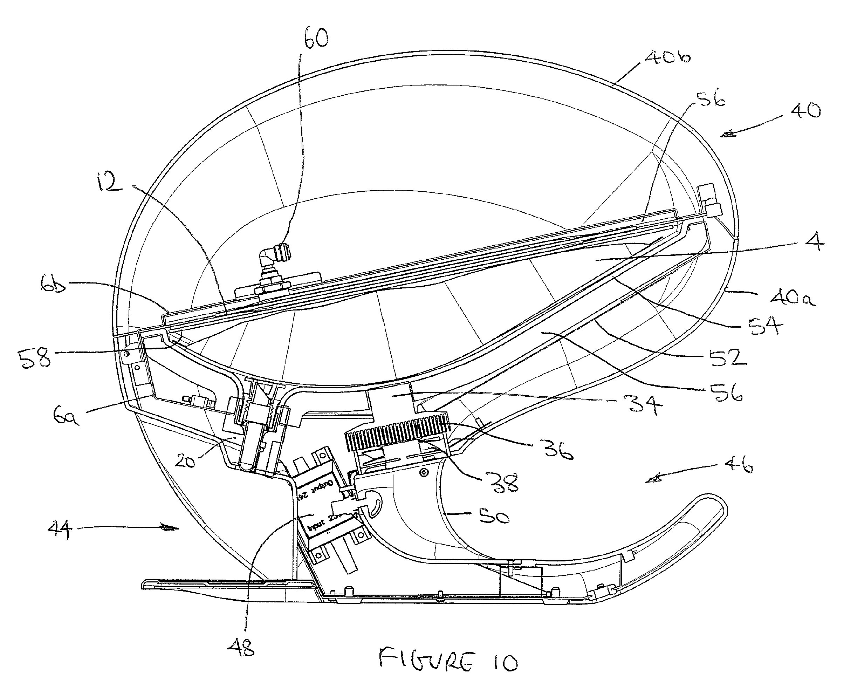

In the following description, the general principle of the apparatus according to the invention will first be described with reference to Figures 1 to 6 of the drawings followed by a description of practical embodiments of the invention with reference to Figures 7 to 13 of the drawings. Where appropriate, like reference numerals are used to indicate the same or similar parts in the drawings.

Referring first to Figures 1 to 6 of the drawings, there is depicted a foodstuff dispenser 2 for dispensing a flowable, viscous foodstuff such as yoghurt or soft ice cream contained in a flexible pouch 4. The pouch 4 is made of a food grade plastics film material.

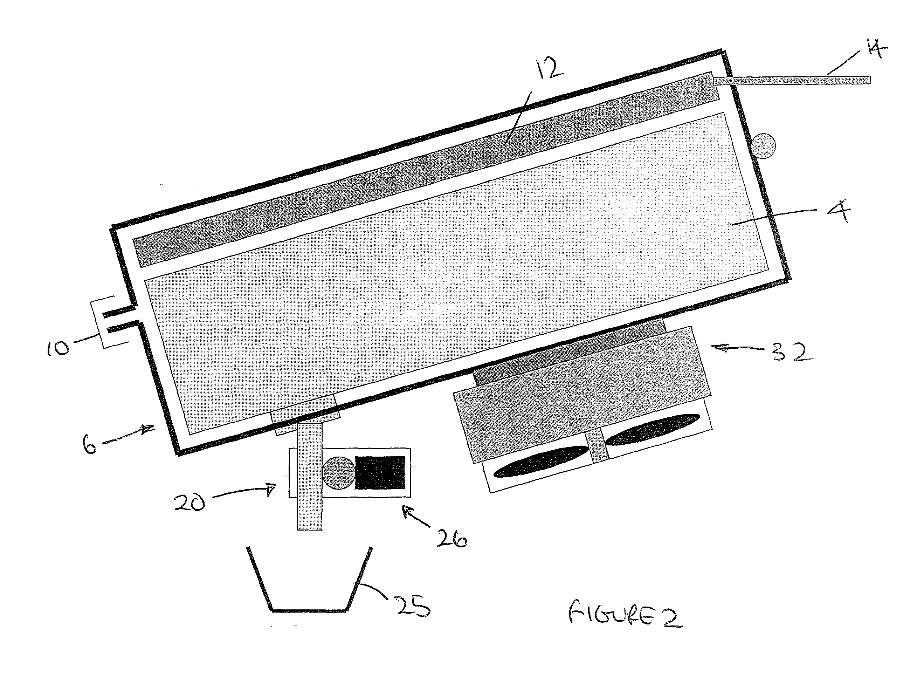

The pouch 4 is received in the lower part 6a of a two part shell 6. The upper part 6b of the shell 6 is connected to the lower part 6a by a hinge 8 that allows the upper part 6b to be raised to open the shell 6 (Figure 1) and lowered to close the shell (Figures 2 to 5).

When open, an empty pouch 4 can be removed from the shell 6 and a full pouch 4 can be loaded into the shell 6. When closed, a releasable catch 10 secures the upper part 6b to the lower part 6a and prevents accidental opening of the shell 6. The catch 10 may be locked to prevent unauthorised opening of the shell 6.

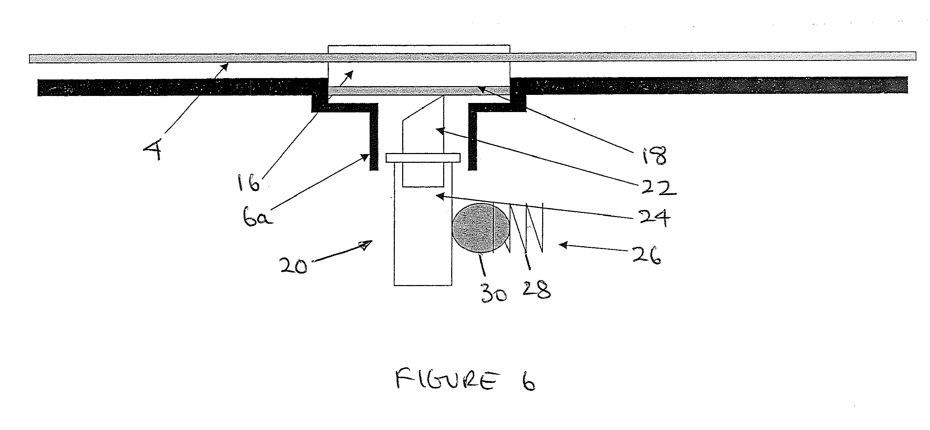

A flexible bag 12 is received in the upper part 6b of the shell and is connected to a fluid source (not shown) such as compressed air by a line 14 for admitting air to inflate the bag 12. An air compressor (not shown) working at low pressure may be employed to achieve a low noise level. The pouch 4 is filled with the flowable foodstuff and sealed during manufacture for storage prior to loading in the apparatus. The pouch 4 is preferably capable of withstanding the inflation pressure. An outlet for the foodstuff is provided by a connector 16 attached to the pouch 4 during manufacture. A rupturable membrane 18 (Figure 6) covers the outlet and is configured for attaching a nozzle 20 for dispensing the foodstuff. The membrane 18 may be provided by the wall of the pouch 4 or by a separate membrane.

The nozzle 20 has a cutter 22 (Figure 6) that pierces the membrane 18 when the nozzle 20 is attached to the connector 16. The nozzle 20 also has a flexible tube 24 through which the foodstuff can pass from the pouch 4 for dispense into a container 25 placed under the end of the tube 24. The tube 24 is arranged so that foodstuff can pass directly from the tube 24 into the vessel 25 without contacting other parts of the apparatus.

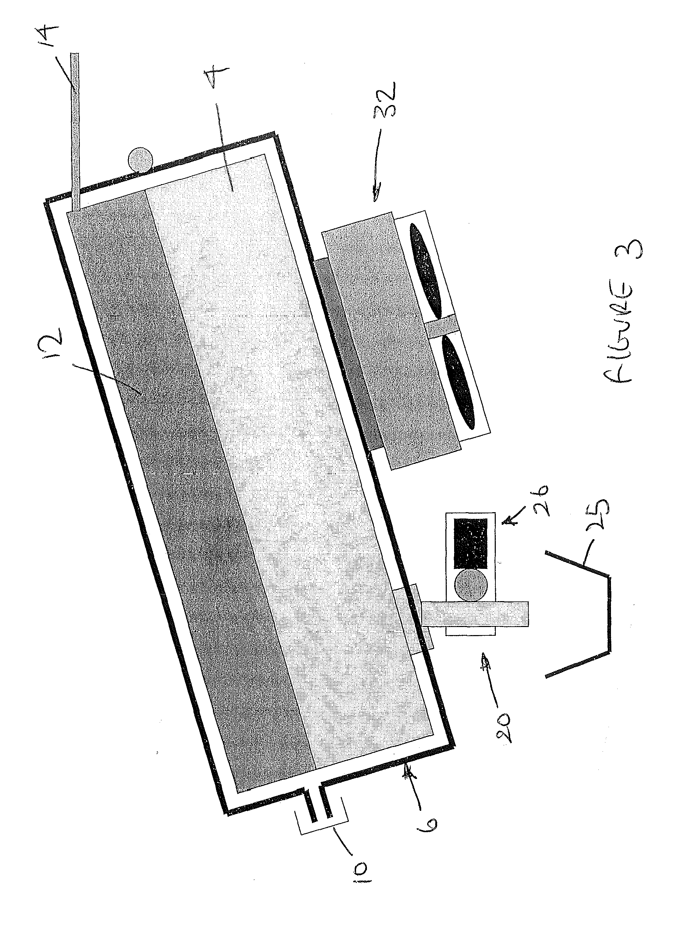

The supply of fluid to inflate the bag 12 and compress the pouch 4 to force foodstuff from the pouch 4 for dispense through the nozzle 20 may be controlled by switching the air compressor on and off. Alternatively or additionally, a valve (not shown) may be provided in the line 14 to connect and disconnect the fluid source. Between dispenses, the air compressor is stopped or the valve is closed and the bag 12 remains inflated so that, when the air compressor is restarted or valve is opened again to re-connect the fluid source, the bag 12 is further inflated to force foodstuff from the pouch 4. This arrangement results in the pouch 4 collapsing progressively (Figures 3 to 5) in a controlled manner until substantially all the foodstuff has been dispensed.

The nozzle 20 may be provided with a valve 26 to control dispense of the foodstuff. The dispense valve 26 may be of any suitable type, for example a pinch valve operable to flatten the tube 24 intermediate the ends and prevent passage of the foodstuff through the tube 24 under the biasing of a spring 28 acting on a valve member 30.

The dispense valve 26 may be opened and closed manually to control dispense of the foodstuff. In this way, when the bag 12 is connected to the fluid source 14, portion size may be controlled manually by the user opening and closing the dispense valve 26. The period of time the dispense valve 26 is open may be changed by the user to vary the portion size.

Alternatively, the dispense valve 26 may be opened and closed automatically to control dispense of the foodstuff. In this way, when the bag 12 is connected to the fluid source 14, portion size may be controlled by period of time the dispense valve 26 is open and/or by the rate of inflation of the bag 12. The period of time the dispense valve 26 is open may be selected by the user to vary the portion size.

Opening and closing the dispense valve may be linked to the fluid supply for inflating the bag 12 to control dispense of the foodstuff. For example, the dispense valve 26 may be opened before or after or at the same time the air compressor is started or the valve in the line 14 opened to supply compressed air to the bag 12 and closed before or after or at the same time the air compressor is stopped or the valve in the line 14 closed to cut-off the supply of compressed air to the bag 12.

In one arrangement, the dispense valve 26 may be opened automatically in response to the pressure of the foodstuff in the pouch 4. Thus, the dispense valve 26 opens automatically when the pressure of the foodstuff overcomes the biasing of the spring 28 causing the valve member 30 to move to open the tube and allow passage of foodstuff through the tube 24 when compressed air is supplied to inflate the bag 12 and compress the pouch 4. The dispense valve 26 closes automatically when the biasing of the spring 28 overcomes the pressure of the foodstuff causing the valve member 30 to move to close the tube 24 and prevent passage of foodstuff through the tube 24 when the supply of compressed air to the bag 12 is cut-off.

In another arrangement, the dispense valve 26 may be opened and closed by any suitable means such as a solenoid in response to the supply of compressed air to the bag 12. The dispense valve 26 may be opened and closed before, after or at the same time the air compressor is started and stopped or the valve in the line 14 is opened and closed. The user may be able to select the period of time the compressed air is supplied to the bag 12 and/or the period of time the dispense valve 26 is open to control the portion size.

In another arrangement, the supply of compressed air to the bag 12 may be provided in response to opening and closing the dispense valve 26 either manually or automatically. The air compressor may start and stop or the valve in the line 14 may be opened and closed at the same time the dispense valve 26 is opened and closed or at some other time. The user may be able to select the period of time the dispense valve 26 is open and/or the period of time the compressed air is supplied to the bag 12 to control the portion size.

In use, when a full pouch 4 is inserted and the shell 6 is closed, there may already be some mechanical pressure on the pouch 4 that may allow product to flow even though the bag 12 is not inflated. We may achieve a uniform or regular flow of product by balancing the flow of the air supply to the bag 12 and the flow/pressure need for the pouch 4. This may be achieved by profiling the pressure of the air supply. For example, we may start with a very low pressure, say 0,05bar when the pouch 4 is full and gradually increase the pressure over time as the pouch 4 empties. At the end of dispense, when the pouch 4 is empty, the pressure may have increased up to say 0,3bar. The maximum inflation pressure is preferably less than the burst strength of the pouch 4 so as to prevent the pouch rupturing within the shell 6. Means such as a micro switch (not shown) may be provided to detect lift up of the upper part 6b of the shell 6 under pressure and cut off the air compressor or close the valve in the line 14 to restrict the pressure and prevent over inflation of the bag 12 that may cause the bag 12 and/or the pouch 4 to rupture. Operation of the microswitch may indicate the pouch 4 is empty and needs to be replaced. Any other means for detecting the pouch 4 is empty may be employed.

The shell 6 is made of a high thermal conductivity material such as metal and is connected directly to a heat transfer device 32 for cooling the shell. The device 32 includes a thermoelectric element 34 sandwiched between the lower part 6a of the shell 6 and a heat exchanger 36. The thermoelectric element 34 is arranged to cool the shell 6, and the heat exchanger 36 is air cooled to dissipate heat extracted by the thermoelectric element 34 to atmosphere by means of a fan 38 driven by a motor (not shown).

The pouch 4 has a large surface area in thermal contact with the shell 6 for heat transfer between the foodstuff in the pouch 4 and the shell 6 to cool the foodstuff. The nozzle 20 is also in thermal contact with the shell 6 to cool any foodstuff in the nozzle 20. The temperature at which the foodstuff is stored in and dispensed from the apparatus is responsive to the temperature of the shell 6.

The heat transfer device 32 is operable under the control of one or more temperature sensors (not shown) for monitoring the temperature of the foodstuff in the pouch 4 or the temperature of the shell 6 or a combination of both to cool the shell 6 so as to maintain the foodstuff at a required temperature or within a required temperature range for dispense.

A user operable interface (not shown) may be provided for activation of dispense. The interface may include one or more push buttons, levers or touch pads for user activation of dispense and/or selection of the volume to be dispensed. The pouch 4 may contain a sufficient volume of foodstuff for dispense of several portions of foodstuff of the same or different volume according to the set-up of the apparatus.

For example, the shell 6 may be designed to receive yoghurt pouches containing 3kg, 5kg or 10kg of yoghurt and the apparatus may be set-up to store and dispense the yogurt at a temperature of 4 degrees C in individual portions of 130g each at a flow rate of 20g per second and a dispense time of about 6.5 seconds for each portion. The volumes, flow rates and times are given by way of example only and are not limiting on the scope of the invention.

Means may be provided to monitor one or more parameters impacting on the quality or condition of the yoghurt and to prevent dispense if the monitored parameter reaches or exceeds a pre-determined value or falls outside a pre-determined range so as to prevent yoghurt being dispensed that may not be of an acceptable quality.

In some embodiments, means such as a temperature sensor may be employed to monitor the storage temperature of the yoghurt and provide a signal to a controller operable to prevent dispense if the storage temperature of yoghurt varies from the desired storage temperature by more than a pre-determined amount, say 2 degrees C, especially an increase in temperature of more than 2 degrees C such that the quality or condition of the yoghurt may have been altered.

In some embodiments means such as a micro-switch may be employed to detect when a new pouch 4 is installed and provide a signal to a controller operable to count down the time equal to the open shelf life of the pouch 4, for example a pouch containing yoghurt may have an open shelf-life of a few days, and to prevent dispense when the shelf-life is reached.

In some embodiments, the pouch may be provided with best before and end dates in a machine readable format such as a bar code or RFID tag and, means such as a bar code reader may be employed to detect when a new pouch is installed and provide a signal of the remaining product life to a controller operable to prevent dispense if the best before date has already passed or when the end date is reached.

A visual or audible warning or both may be provided that a pouch 4 needs to be replaced for any reason, for example the pouch may be empty or a condition affecting the condition or quality of the product has been detected causing the apparatus to lock and prevent dispense until the pouch is replaced. The warnings may be provided by operating a light on the interface or by operating a buzzer or both when the pouch needs to be replaced. The light or buzzer may operate continuously or intermittently until the pouch 4 is replaced. Separate warnings may be provided to identify the reason for replacing the pouch 4. For example, a temperature variation outside acceptable limits may indicate a fault in the cooling system requiring a visit from a service engineer.

When replacing the pouch, the pouch 4 may be removed together with the attached nozzle 20 for disposal and a new pouch 4 with a new nozzle 20 fitted may be inserted in the apparatus. By controlling dispense so that foodstuff displaced from the pouch 4 only contacts the nozzle 20 as it flows from the pouch 4 to the vessel 25, and replacing both the pouch 4 and the nozzle 20 when the pouch is empty, cleaning and sanitisation of the apparatus may be kept to minimum without compromising hygiene.

Referring now to Figures 7 to 12, a practical embodiment of the apparatus is shown in which the shell 6, heat transfer device 32 and other components of the apparatus are housed in an outer casing 40. The casing 40 has a base part 40a and a cover part 40b. The cover part 40b is detachable for access to the shell 6 to remove an empty pouch 4 and load a full pouch 4 as described previously.

The base part 40a provides a flat support surface 42 for standing the apparatus on a countertop and has a recessed area 44 at the front for positioning a container such as a bowl (not shown) underneath the outlet tube 24 of the nozzle 20. A further recessed area 46 is provided at the back of the base part 40a for concealed circulation of air by the fan 38 to dissipate heat extracted by the thermoelectric element 34. A power supply connector 48 for the thermoelectric element 34 and fan motor is located in a neck region 50 of the base part 40a between the recessed areas 44,46.

In this embodiment, the lower part 6a of the shell 6 has an outer wall 52 and an inner wall 54. The pouch 4 contacts the inner wall 54 and the thermoelectric element 34 directly cools the inner wall 54. The nozzle 20 also contacts the inner wall 54. In this way, the pouch 4 and nozzle 20 are cooled to maintain foodstuff contained therein at the required temperature for dispense.

Thermal insulation 56 is provided in the space between the outer and inner walls 52,54 of the lower part 6a and also between the bag 12 and the upper part 6b to assist in maintaining the foodstuff contained in the pouch 4 within the shell 6 at the required temperature by reducing or eliminating heat exchange between the foodstuff and the ambient environment.

Also, in this embodiment, a pressure plate 58 is provided between the bag 12 and the pouch 4. The plate 58 acts to distribute the pressure applied to the pouch 4 as the bag 12 is inflated causing the pouch 4 to collapse (reduce in volume) in a controlled manner so that substantially all the contents of the pouch 4 can be dispensed by reducing or preventing formation of pockets in the pouch 4 where the foodstuff can be trapped. In this embodiment, the plate 58 is made of plastics material and is flexible to allow the plate 58 to adapt to changes in shape of the pouch 4 as the bag 12 inflates to ensure substantially all of the product can be dispensed from the pouch 4.

The bag 12 has a connector 60 such as a push-fit connector for attaching the fluid line (not shown) to inflate the bag. The fluid supply to inflate the bag 12 may be controlled by a valve (not shown) that is opened at the start of dispense and closed at the end of dispense. The valve may control the rate of inflation of the bag 12 and thus the rate of dispense of the foodstuff. A uniform rate of dispense may allow the volume dispensed to be controlled by the duration (time) of dispense.

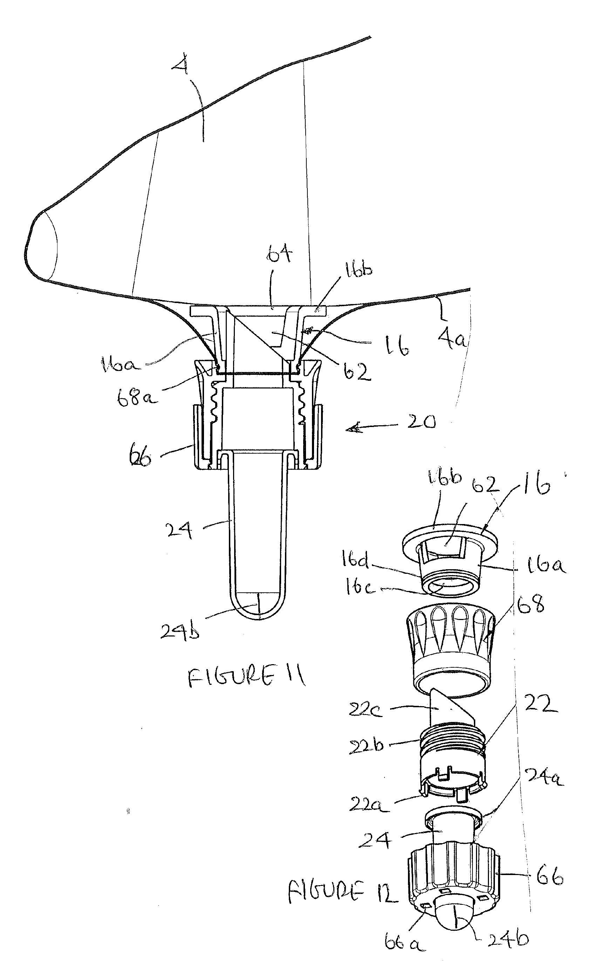

As best shown in Figures 11 and 12, the pouch connector 16 has a tubular body 16a with a flange 16b at one end. The other end of the body 16a is secured inside the pouch 4 to the pouch wall 4a during manufacture and, in use, provides an outlet 16c for dispense of product from the pouch 4. The body 16a is provided with a series of openings 62 whereby the contents of the pouch 4 can flow into the body 16a via the openings 62 and an opening 64 bounded by the flange 16b at the end of the body 16a. This arrangement of the openings 62,64 enables a high flow rate to be achieved during dispense and ensures that openings 62 at least remain open as the pouch 4 is compressed and the wall approaches the flange 16b so that substantially all the contents of the pouch 4 can be dispensed.

The nozzle 20 has a cap 66 with a central hole through which the outlet tube 24 extends. The cutter 22 is secured to the cap 66 by engagement of hook members 22a in apertures 66a in the cap 66 and the outlet tube 24 has a flange 24a at one end secured between the cutter 22 and the cap 66.

The cutter 22 has an external screw 22b thread by means of which the nozzle 20 is releasably attached to an adaptor 68 for securing the nozzle to the connector 16. The adaptor 68 is a snap-fit to the body 16a of the connector 16 by engagement of an internal rib 68a in an external groove 16d adjacent to the end of the body 16a. The adaptor 68 and nozzle 20 may be pre-assembled and the adaptor 68 secured to the connector 16 to cause the end 22c of the cutter 22 to pierce the wall 4a of the pouch 4 covering the outlet 16c at the end of the body 16a. Alternatively, the adaptor 68 may be secured to the connector 16 and the nozzle 20 then attached to the adaptor to cause the end 22c of the cutter 22 to pierce the wall 4a of the pouch 4 covering the outlet 16c at the end of the body 16a.

The other end of the outlet tube 24 is closed and formed with a self-closing slit 24b that is opened by pressure of the foodstuff during dispense and closes automatically on completion of dispenses so as to prevent any foodstuff remaining in the nozzle 20 downstream of the pinch valve 26 dripping from the nozzle 20.

The operation of the apparatus to dispense foodstuff contained in the pouch 4 is similar to and will be understood from the general description of the apparatus shown in Figures 1 to 6.

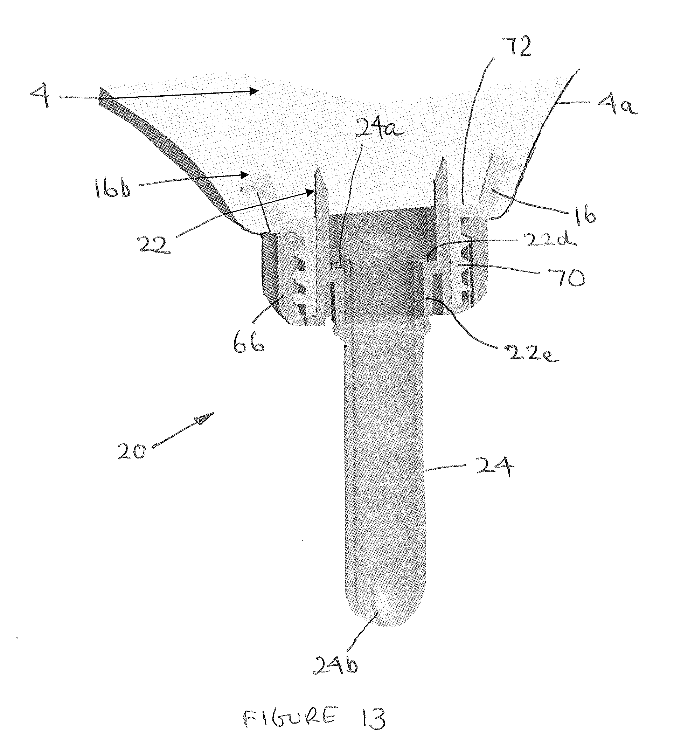

Figure 13 shows an alternative pouch connector 16 and nozzle 20. In this modification, the pouch connector 16 is attached to the pouch 4 and provides a boss 70 with an external screw thread projecting from the pouch 4. The connector 16 is secured to the wall 4a of the pouch 4 during manufacture and a rupturable membrane (not shown) is provided across the inner end of the boss 70 where it meets shoulder 72. The cutter 22 is integral with the cap 66 and the cap 66 has an internal screw thread for attaching the nozzle 20 to the pouch connector 16 so that the cutter 22 passes through the boss 70 and pierces the membrane. The cutter 22 has an internal shoulder 22d that leads to a short cylindrical portion 22e within the cutter 22. Flange 24a at the inner end of the outlet tube 24 seats on the shoulder 22d and the cylindrical portion 22e guides and supports the wall of the outlet tube 24 adjacent to the flange 24a.

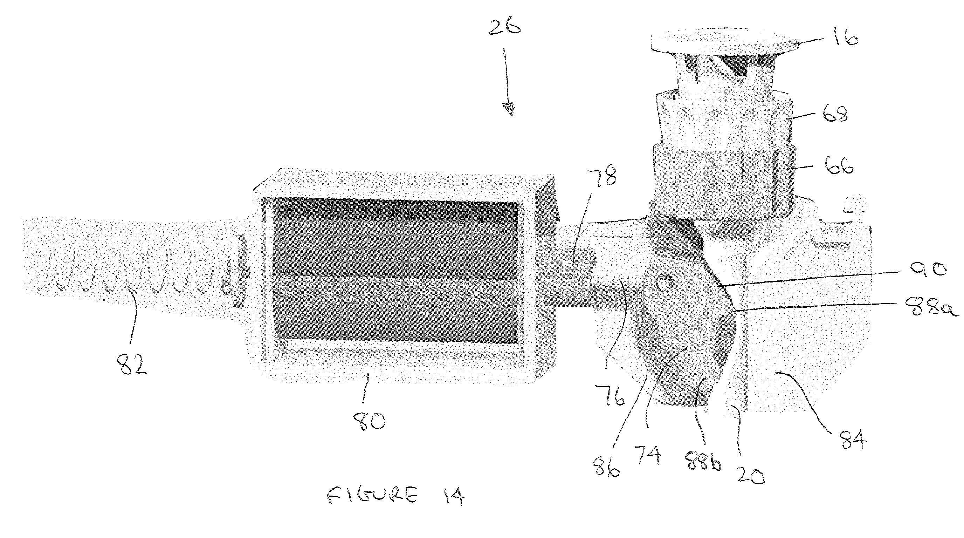

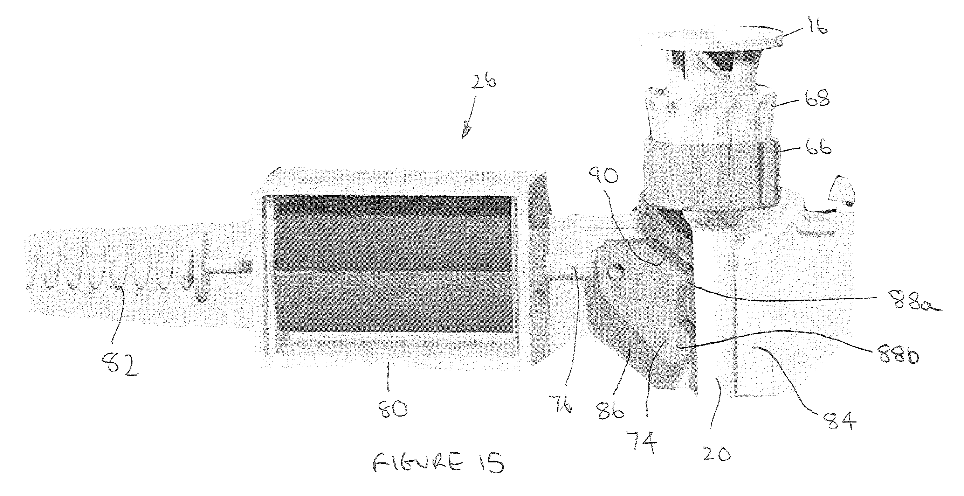

Figures 14 and 15 show a solenoid valve 26 having a valve member 74 pivotally mounted on a rod 76 connected to an armature 78 of a solenoid 80. The armature 78 is biased by a spring 82 in a direction to urge the valve member 74 to flatten flexible outlet tube 24 of the nozzle 20 to prevent dispense of foodstuff from the pouch (not shown) in the closed position of the valve shown in Figure 14. The biasing force of the spring 82 is overcome when the solenoid 80 is energised causing the armature to move to the left as viewed in the drawing allowing the outlet tube 24 to open so that foodstuff can be dispensed from the pouch in the open position of the valve shown in Figure 15.

The solenoid 80 may be energised by actuation of a user operable control (not shown) such as a push button to operate a microswitch controlling a power supply to energise the solenoid 80 to open the valve 26 as long as the microswitch is operated by the user pushing the button. Releasing the push button causes the microswitch to de-energise the solenoid 80 whereupon the armature 78 moves to the right as viewed in the drawing under the biasing of the spring 82 to close the valve 26 to prevent dispense of the foodstuff. In this way, the user can control the volume of foodstuff that is dispensed according to the length of time the push button is operated. Also, in the event of a power failure, the valve 26 is closed under the biasing of the spring 82.

In a modification, the power supply to energise the solenoid 80 may be controlled through a timer circuit that is activated through the user operable control to open the valve 26 for a pre-set period of time to dispense a pre-determined volume of foodstuff. In another modification, the spring 82 may bias the armature 78 to open the valve and the valve is held closed when the solenoid 80 is energised. This may be less preferred as the valve would open in the event of a power failure.

Operation of the solenoid valve 26 may be linked to the air compressor so that air is admitted to the reservoir to compress the pouch and displace foodstuff from the pouch through the nozzle 20 as described previously.

As shown, the flexible outlet tube 24 is received in a funnel-shaped outlet 84 of the dispenser and the valve member 74 is received in an opening 86 on one side of the outlet 84. When the solenoid 80 is de-energised, the valve member 74 is urged by the spring 82 to initially pinch and flatten the outlet tube 24 at upper and lower positions between the wall of the outlet 84 opposite the opening 86 and a pair of formations 88a, 88b on the valve member 74.

The valve member 74 then pivots in a clockwise direction so that the tube 24 remains pinched flat at the upper position between the wall of the outlet 84 and the upper formation 88a and is released between the wall of the outlet 84 and the lower formation 88b as shown in Figure 14. Releasing the tube 24 at the lower position allows air to be drawn into the end of the tube and suck back any product remaining in the tube below the upper closed position so as to prevent product dripping out of the tube 24.

The valve member 74 is configured so that an inclined face 90 is engaged by a portion of the tube 24 above the position where the tube 24 is closed by the upper formation 88a and pressure of foodstuff in the pouch acting on the face 90 assists the pinching force on the tube 24 to prevent leakage of foodstuff from the pouch.

The two step closing operation of the valve provides an anti-dripping feature which, in this embodiment, may be assisted by the curved profile of the lower formations 88b providing a larger contact area to pinch or flatten the tube during the first stage of closing than the flat profile of the upper formation 88a.

When the valve is opened, the valve member 74 pivots back to the position shown in Figure 15 under the biasing of a spring (not shown) or other suitable means. Outlet 84 may by part of or attached to the shell and be made of material having a high thermal conductivity thermally for cooling the tube 24.

As will be apparent from the description of preferred embodiments, the present invention provides apparatus for dispensing a flowable foodstuff. The foodstuff is preferably pre-packed in a sealed pouch that is broached when the nozzle is attached. The pouch is preferably collapsed to force the foodstuff from the pouch through the nozzle into a vessel without coming into contact with other parts of the apparatus. The pouch is preferably cooled to keep the foodstuff at the required dispense temperature to maintain the condition and quality of the foodstuff until the pouch is empty. The nozzle is preferably cooled to prevent foodstuff in the nozzle warming up to any appreciable extent between dispenses. The pouch is preferably disposable when empty. The nozzle is preferably arranged to dispense the foodstuff into a collecting vessel without the foodstuff contacting other parts of the apparatus and is preferably disposable with the pouch after use so as to reduce cleaning and sanitisation of the apparatus without compromising hygiene.

It will be understood that the invention is not limited to the embodiments above-described and changes to the embodiments can be made without departing from the principles or concepts outlined herein. Any of the features described herein may be employed separately or in combination with any other features and the invention extends to and includes all such arrangements and combinations without limitation.

For example, the present invention may provide a valve for dispense of flowable foodstuffs such as yoghurt, soft ice cream and similar products, the valve comprising a flexible tube through which foodstuff can be dispensed in an open position of the valve, and a valve member operable to flatten or pinch the tube to prevent dispense of foodstuff through the tube in a closed position of the valve, the valve member being operable initially to flatten or pinch the tube at two spaced apart positions in the direction of flow through the tube and then to release the tube at the position nearer to an outlet end of the tube while continuing to flatten or pinch the tube at the other position. In this way, air is drawn into the outlet end of the tube and any foodstuff remaining in the tube on the outlet side of the valve is prevented from dripping from the outlet end.

## Claims

1. Apparatus for dispensing a flowable foodstuff comprising means for receiving packaging containing the foodstuff, means for cooling the foodstuff, means for displacing the foodstuff from the packaging, an outlet nozzle for dispensing foodstuff displaced from the packaging, and a valve for controlling flow of foodstuff through the outlet nozzle.

2. Apparatus according to claim 1 wherein the packaging comprises a flexible container and the displacing means comprises a flexible reservoir connectable to a fluid supply, for example an air compressor, to inflate the reservoir and thereby apply pressure to collapse the packaging container and force foodstuff from the container, preferably a metered or measured volume of foodstuff.

3. Apparatus according to claim 2 wherein the receiving means receives both the packaging container and the displacing reservoir and is substantially rigid so that change in volume of the displacing reservoir causes a similar change in volume of the packaging container.

4. Apparatus according to claim 1 or claim 2 wherein the displacing reservoir is placed against and directly contacts the packaging container or the displacing reservoir and packaging container are separated by a force transmitting member that applies the force generated by increase in volume of the displacing reservoir to the packaging container.

5. Apparatus according to any of claims 2 to 4 wherein the cooling means cools the packaging container and/or the outlet nozzle, for example at least that part of the receiving means in contact with the packaging container and/or outlet nozzle is made of a material having a high thermal conductivity.

6. Apparatus according to any preceding claim wherein the cooling means is controlled to maintain the foodstuff at a desired temperature or within a desired temperature range, for example the cooling means is responsive to one or more temperature sensors for controlling operation of the cooling means to maintain the desired temperature or temperature range, and wherein the or each temperature sensor preferably provides a signal to a controller operable to prevent dispense if the temperature varies from the desired temperature or temperature range by more than a pre-determined value, for example at least one temperature sensor arranged to monitor the temperature of the foodstuff within the packaging container and/or at least one temperature sensor arranged to monitor the temperature of the shell.

7. Apparatus according to any preceding claim wherein the outlet nozzle is configured to dispense foodstuff displaced from the packaging container into a vessel so that the foodstuff does not contact other parts of the apparatus and wherein the outlet nozzle is preferably disposable.

8. Apparatus according to any preceding claim wherein the packaging container is sealed during manufacture to preserve the foodstuff and is provided with a connector for attaching the outlet nozzle, and wherein the outlet nozzle includes a device to pierce the packaging container so that the foodstuff can be dispensed through the outlet nozzle, for example the packaging container is preferably pierced when the outlet nozzle is attached to the connector on the packaging container.

9. Apparatus according to any preceding claim wherein the outlet nozzle comprises a flexible tube and the valve is operable to flatten or pinch the tube to prevent dispense of the foodstuff.

10. Apparatus according to claim 9 wherein the valve is operable to pinch the tube at upper and lower positions in a first step and to release the tube at the lower position in a second step to suck air into the tube below the upper position and prevent foodstuff dripping from the tube..

11. Apparatus according to claim 9 or claim 10 wherein the valve is linked to operation of the displacing means such that the displacing means is responsive to operation of the valve or operation of the valve is responsive to the displacing means.

12. Apparatus according to any preceding claim wherein a user interface is provided for activating dispense of foodstuff comprising at least one user operable control to start dispense and control means responsive to the user operable control for controlling the displacing means to displace foodstuff from the packaging container.

13. Apparatus according to any preceding claim wherein the apparatus is configured to monitor the open shelf-life of the packaging container and to prevent dispense of food on expiry of the shelf-life and/or is configured to determine the remaining product life when a new packaging container is inserted and to prevent dispense on expiry of the product life.

14. A method of dispensing a flowable foodstuff from a packaging container, the method comprising the steps of providing a packaging container containing a flowable foodstuff with an outlet nozzle controlled by a valve, controlling the temperature of the foodstuff in the packaging container, and applying pressure to the packaging container to force foodstuff from the packaging container through the outlet nozzle for dispense of the foodstuff.

15. A method according to claim 14 wherein the outlet nozzle comprises a flexible tube and the valve comprises a valve member that closes the tube by flattening the tube wall to prevent flow of foodstuff in a closed condition and allows the tube wall to open for flow of foodstuff in an open condition, and the valve is linked to the means for applying pressure to the packaging container such that operation of the valve controls the operation of the pressure applying means or vice versa, and the pressure applied to the packaging container is controlled to provide a substantially constant flow rate of dispensed foodstuff by increasing pressure applied to the packaging container as foodstuff is dispensed.
